# EUROPÄISCHE PATENTANMELDUNG

(11) **EP 0 694 952 A2**
(43) Veröffentlichungstag der Anmeldung: **31.01.1996**
(21) Anmeldenummer: 95112033.6
(22) Anmeldetag: 31.07.1995
(51) Int. Cl.: H01J 61/30, H01J 61/56, H01J 61/72

(54) **Kompakt-Leuchtstofflampe mit Glühlampensockel, insbesondere mit Sockelgewinde Typ E 27 oder E 14**

(30) Priorität: 30.07.1994 DE 9412337 U
(71) Anmelder: Schiller, Christa, D-90429 Nürnberg (DE)
(72) Erfinder: Schulz, Horst, D-90429 Nürnberg (DE)
(74) Vertreter: Buchau, Erhard, Dipl.-Ing.

(57) **Zusammenfassung**

Eine Kompakt-Leuchtstofflampe mit Glühlampensockel, insbesondere mit Sockelgewinde Typ E 27 oder E 14, und integriertem Vorschaltgerät bzw. Starter weist als äußere Umhüllung einen birnenförmigen, mit dem Sockel (1) verdrehungssicher verbundenen Hohlkolben (5, 50) in der Form der bekannten Glühlampe Typ Edison auf. Der Hohlkolben (5, 50) besteht zumindest aus durchscheinendem Material (Glas, Kunststoff, gefärbter Kunststoff). Auch geeignet als Zusatzbauteil für gängige Kompakt-Leuchtstofflampen ist der Hohlkolben, wenn er als Hohlkolben-Kappe (5a) ausgebildet ist, die auf einen topfförmigen Sockelfortsatz (2) aufsetzbar ist. Der Sockelfortsatz (2) enthält das insbesondere elektronische Vorschaltgerät (3). Der Hohlkolben kann auch ein doppelwandiger Hohlglaskolben (50) sein, der im Hohlraum (33) zwischen Innen- und Außenwand (52, 51) den Entladungsraum sowie in diesen Entladungsraum ragende Elektroden (E1) aufweist.

## Beschreibung

Die Erfindung bezieht sich auf eine Kompakt-Leuchtstofflampe mit Glühlampensockel, insbesondere mit Sockelgewinde Typ E 27 oder E 14, und mit integriertem Vorschaltgerät bzw. Starter, gemäß Oberbegriff des Anspruchs 1.

Derartige Kompakt-Leuchtstofflampen haben bei einer Lichtausbeute von ca. 50 lm/W und einer Lebensdauer von ca. 8000 Stunden gewisse Vorzüge im Vergleich zu Glühlampen (Lichtausbeute von ca. 12 lm/W, Lebensdauer von ca. 1000 Stunden), auch unter Berücksichtigung ihres relativ zu Glühlampen höheren Preises. Die im folgenden abgekürzt KLS-Lampen bezeichneten Kompakt-Leuchtstofflampen haben eine glühlampenähnliche Lichtfarbe und Farbwiedergabeeigenschaft und insbesondere Glühlampensockel E 27 und E 14. Die Lichterzeugung beruht auf dem Prinzip der bekannten Leuchtstofflampen. In den KLS-Lampen Typ SL sind ein induktives Vorschaltgerät und ein Starter, in der KLS-Lampe Typ PLCE ist ein elektronisches Vorschaltgerät eingebaut.

Der Erfindung liegt die Aufgabe zugrunde, das Handling bei den bekannten KLS-Lampen der geschilderten Art hinsichtlich des Ein- und Ausschraubens zu verbessern und die Sicherheit gegen das Beschädigen der bei vielen Ausführungen frei aus dem Sockel ragenden U-förmigen Leuchtstoffröhren zu vergrößern.

Erfindungsgemäß wird die gestellte Aufgabe bei einer KLS-Lampe der eingangs definierten Art durch die im Kennzeichen des Anspruchs 1 angegebenen Merkmale gelöst, nämlich dadurch, daß die KLS-Lampe als äußere Umhüllung einen birnenförmigen, mit dem Sockel verdrehungssicher verbundenen Hohlkolben in der Form der bekannten Glühlampen Typ Edison aufweist und der Hohlkolben aus zumindest durchscheinendem Material besteht.

Vorteilhafte Weiterbildungen sind in den Ansprüchen 2 bis 17 angegeben. Die mit der Erfindung erzielbaren Vorteile sind vor allem darin zu sehen, daß das Handling oder die Handhabbarkeit beim Ein-oder Ausschrauben der neuen KLS-Lampen nach der Erfindung im Vergleich zu den bisherigen Ausführungen wesentlich verbessert ist. Der Endverbraucher ist an die Birnenform der Glühlampen Typ Edison gewöhnt und kann diese besser handhaben. Die empfindlichen, insbesondere U- oder stabförmigen Leuchtstoffröhren, die bei vielen der bisherigen KLS-Lampen frei liegen, sind nun durch einen birnenförmigen Kolben geschützt. Unter ,,zumindest durchscheinendem Material'' wird hier wie im folgenden verstanden, daß der Hohlkolben aus durchscheinendem oder durchsichtigem Material bestehen, d.h. transluzent oder transparent, aber nicht opak sein kann.

Ausgehend von einer KLS-Lampe mit einem sich an den Sockel anschließenden topfförmigen Sockelfortsatz aus Isoliermaterial, der in seinem Inneren ein (induktives) Vorschaltgerät und einen Starter oder ein elektronisches Vorschaltgerät aufnimmt und der Halterung sowie dem elektrischen Anschluß der Leuchtstoffröhre(n) dient, welche auf der Seite seiner sockel-abgewandten Deckfläche nach außen ragen, besteht eine bevorzugte Ausführung der Erfindung darin, daß der birnenförmige Hohlkolben als separate Hohlkolben-Kappe ausgebildet ist, die auf den topfförmigen Sockelfortsatz aufsetzbar ist. Hierfür eignet sich besonders eine Hohlkolben-Kappe, die aus einem elastisch deformierbaren und insbesondere färbbaren Kunststoff, z.B. auf der Basis von Polyethylen oder Polypropylen, besteht. In diesem Zusammenhang ergibt sich ein besonderer kombinatorischer Effekt dadurch, daß sich Kunststoffe bzw. thermoplastische Kunststoffe zusätzlich zur Tönung ,,milchweiß'' in den unterschiedlichsten Regenbogenfarben färben lassen und daß die Verwendung dieser färbbaren Kunststoffe als Hohlkolben-Kappe wegen der geringen Wärmeentwicklung der von der Hohlkolben-Kappe umgebenen Leuchtstofflampen unproblematisch ist. Dementsprechend ist nach einem weiteren Merkmal der Erfindung vorgesehen, daß der Kunststoff-Masse der Hohlkolben-Kappe ein in die Kunststoff-Molekularmatrix einbaubarer Farbstoff beigemischt ist.

Die Hohlkolben-Kappe ist auf den Sockelfortsatz insbesondere aufsteckbar. Hierzu ist es günstig, wenn die Hohlkolben-Kappe am Innenumfang ihres Öffnungsrandes eine umlaufende Wulst aufweist, mit der sie in eine umlaufende Nut am Außenumfang des Sockelfortsatzes einschnappbar ist. Zur Verdrehungssicherung können dabei die Wulst mit kleinen Vor- und Rücksprüngen und die umlaufende Nut mit zugehörigen kleinen Rück- und Vorsprüngen versehen sein, die miteinander verrastbar sind. Zusätzlich dazu oder stattdessen kann man eine Verdrehsicherung erreichen, wenn die Hohlkolben-Kappe mit dem Sockelfortsatz verklebt ist.

Der Hohlkolben oder die Hohlkolben-Kappe bestehen gemäß einem weiteren Merkmal der Erfindung aus durchsichtigem oder durchscheinendem Glas. Eine Hohlkolben-Kappe wird in diesem Falle bevorzugt mittels Klebens oder Kittens am Sockelfortsatz befestigt. In einer besonderen, weil hochintegrierten, Ausführung ist die äußere Umhüllung die Außenwand eines doppelwandigen Hohlglaskolbens und bildet der Hohlraum zwischen Außen- und Innenwand den Entladungsraum der Leuchtstofflampe, wobei mindestens je eine positive und negative Elektrode, gasdicht eingeschmolzen, in den Hohlraum ragen und zur Erzielung der erforderlichen Entladungsweglänge der Hohlraum durch wenigstens eine Trennwand in zwei, je einer Elektrode zugeordnete Entladungs-Teilräume unterteilt ist, die an ihren einander zugewandten Enden über eine von der Trennwand freigelassene Entladungsgasse gasströmungsmäßig und elektrisch miteinander verbunden sind.

Für die vorgenannte Ausführung mit doppelwandigem Hohlglaskolben wie auch diejenige mit Hohlkolben-Kappe besteht eine Weiterbildung der Erfindung darin, daß Hohlkolben oder Hohlkolben-Kappe an oder auf einem Steckerteil sitzen, der an die Leuchtstofflampe elektrisch angeschlossen ist, und mit dem Steckerteil in eine Vorschaltgerät und ggfs.

Starter enthaltende Adapter-Einheit aus Sockelfortsatz und Sockel, vorzugsweise einrastbar, einsteckbar sind. Man kann auf diese Weise die Lebensdauer der Adapter-Einheit, die etwa zwei- bis dreimals so groß ist wie die einer KLS-Lampe, besser ausnutzen, indem am Ende ihrer Lebensdauer nur die KLS-Lampe mit Hohlkolben oder Hohlkolben-Kappe und dem Steckerteil ausgewechselt/erneuert wird; die Adapter-Einheit bleibt eingeschraubt in der Lampenfassung.

Weitere Merkmale und Vorteile des Erfindungsgegenstandes sowie dessen Aufbau und Wirkungsweise werden im folgenden anhand der Zeichnung, in welcher mehrere Ausführungsbeispiele dargestellt sind, noch näher erläutert. In der Zeichnung zeigt in z. T. vereinfachter, schematischer Darstellung:
- **Fig. 1**: eine erste Ausführung einer KLS-Lampe nach der Erfindung im Aufriß, z.T. im Schnitt, mit Sockel E 14 und aufgesetzter Hohlkolben-Kappe;
- **Fig. 2**: den Teilschnitt bzw. das Detail X aus Fig. 1, d.h. die Randwulst an der Hohlkolben-Kappe, eingefügt in die umlaufende Nut am Außenumfang des Sockelfortsatzes;
- **Fig. 3**: die Hohlkolben-Kappe nach Fig. 1, z.T. in weggebrochener Darstellung,, bei deren einer Hälfte demonstriert ist, wie durch eine Riffelung oder Zahnung, die mit einer zugehörigen Riffelung oder Zahnung am Außenumfang des Sockelfortsatzes (Fig. 1) kooperiert, eine Verdrehsicherung erreicht werden kann;
- **Fig. 4**: den Schnitt gemäß Schnittebene IV - IV aus Fig. 3;
- **Fig. 5**: die Draufsicht auf den Steckerteil der Sonderausführung einer KLS-Lampe;
- **Fig. 6**: den Steckerteil nach Fig. 5 im Aufriß;
- **Fig. 7**: den Steckerteil nach Fig. 5 im Seitenriß;
- **Fig. 8**: eine Draufsicht auf die Adapter-Einheit, in welche der Steckerteil nach Fig. 5 bis 7 eingesteckt werden kann;
- **Fig. 9**: die Adapter-Einheit nach Fig. 8 im Aufriß in etwas verkürzter Darstellung;
- **Fig. 10**: die Gesamtansicht der Adapter-Einheit nach Fig. 8 und 9 und der in diese mit ihrem Steckerteil eingesteckten KLS-Lampe nach Fig. 5 bis 7;
- **Fig. 11**: ein drittes Ausführungsbeispiel einer KLS-Lampe nach der Erfindung mit einem doppelwandigen Hohlglaskolben, wobei der Hohlraum zwischen Innen- und Außenwand den Entladungsraum der KLS-Lampe bildet, im Schnitt nach der Schnittebene IX - IX aus Fig. 12;
- **Fig. 12**: den Schnitt nach der Schnittebene XII - XII aus Fig. 11;
- **Fig. 13**: eine Abwandlung des Beispiels nach Fig. 11 und 12, wobei statt eines Elektrodenpaares nun deren zwei und dementsprechend nicht nur zwei sondern vier Teilentladungsräume vorgesehen sind,in Ansicht von oben auf die KLS-Lampe; und
- **Fig. 14**: den doppelwandigen Hohlglaskolben nach Fig. 12, verkleinert und um 90° gedreht, wobei zusätzlich zu der in der Mitte ersichtlichen Trennwand für den Entladungsraum eine schraubenförmig verlaufende Trennwand gestrichelt als Alternative angedeutet ist.

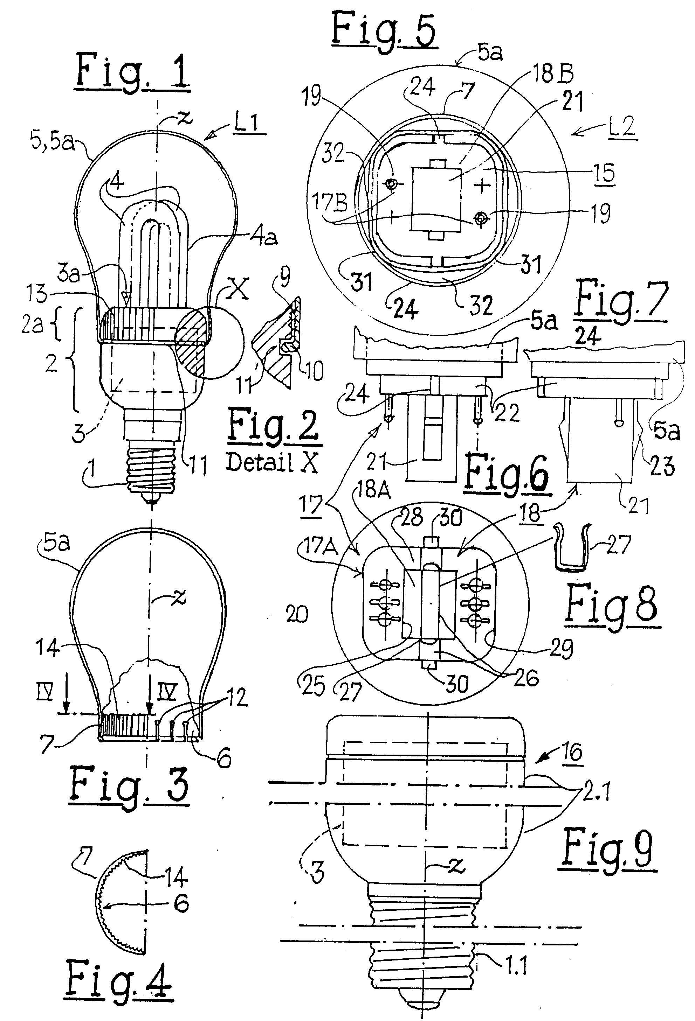

Die KLS-Lampe L1 nach Fig. 1 hat einen Glühlampensockel 1 mit Sockelgewinde Typ E 14 (Zwerggewinde für KLS-Lampen kleinerer Leistung, z.B. 5 oder 9 W). An den Sockel 1 schließt sich ein topfförmiger Sockelfortsatz 2 aus Isoliermaterial an, z. B. aus Keramik oder einem geeigneten Kunststoff, der in seinem Inneren ein vorzugsweise elektronisches Vorschaltgerät 3 (als gestricheltes Rechteck schematisch angedeutet) aufnimmt. Der Sockelfortsatz 2 dient der Halterung sowie dem elektrischen Anschluß von zwei U-förmigen Leuchtstoffröhren 4, welche auf der dem Sockel 1 abgewandten Deckseite 3a nach außen ragen, und zwar mit ihren U-Schenkeln 4a parallel zur Längsachse z der KLS-Lampe L1. Die Schaltung des elektronischen Vorschaltgerätes 3, ihre Verbindung mit den Elektroden der Leuchtstoffröhren 4 sowie diese Elektroden selbst sind in Fig 1 wie auch in den Fig. 2 bis 10 nicht dargestellt, weil es sich dabei um an sich bekannte, im Handel erhältliche Bauteile handelt und deren Erläuterung zum Verständnis nicht erforderlich ist.

Erfindungsgemäß weist die KLS-Lampe L1 als äußere Umhüllung einen birnenförmigen, mit dem Sockel 1 verdrehungssicher verbundenen Hohlkolben 5 in der Form der bekannten Glühlampen Typ Edison auf und besteht der Hohlkolben 5 aus zumindest durchscheinendem Material. Hierfür kommt z.B. infrage: durchsichtiges oder durchscheinendes Glas (Milchglas) oder unter dem Markennamen Plexiglas bekannter Kunststoff. Es ist auch thermoplastischer Kunststoff, z.B. PE (Polyethylen) oder Polypropylen geeignet, ebenso wie duroplastischer Kunststoff, insbesonderer solcher, der sich gleichmäßig und dauerhaft färben läßt. Bei der dargestellten Ausführung der KLS-Lampe L1 mit Sockel 1 und Sokkelfortsatz 2 ist es besonders vorteilhaft, den birnenförmigen Hohlkolben 5, wie dargestellt, als separate Hohlkolben-Kappe 5a auszubilden (vergl. auch Fig. 3), welche auf den topfförmigen Sockelfortsatz 2 aufsetzbar ist. Eine günstige Befestigungsart für die Hohlkolben-Kappe 5a ist das Aufstecken, wobei der Innenumfang 6 des Kappenhalses 7 auf den oberen Sitzflächen 8 des Sockelfortsatzes 2 aufsitzt. Zur Verdrehungssicherung können gemäß einer Ausführung die Flächen (6) und (8) mittels Kleber 9 (in Fig. 2 durch Kreuze angedeutet) miteinander verbunden werden. Gegen axiales Verschieben der Hohlkolben-Kappe 5a auf dem Sockelfortsatz 2 ist gemäß einem weiteren Merkmal vorgesehen, daß die Hohlkolben-Kappe 5a am Innenumfang ihres Öffnungsrandes eine umlaufende, nach innen vorspringende Wulst 10 aufweist, mit der sie in eine umlaufende Nut 11 am Außenumfang des Sockelfortsatzes einschnappbar ist, vergl. insbesondere Fig. 2. Damit der Hals 7 beim Einschnappen weit genug auffedern kann, ist es u.U. zweckmäßig, einige Randschlitze 12, über den Umfang des Halses 7 verteilt, vorzusehen. Diese Maßnahme hängt von der Dicke der Wulst oder Randwulst 10 ab. Wenn man die Hohlkolben-Kappe 5a zur Verdrehungssicherung nicht festkleben will, dann kann man die obere Umfangspartie oder den Bund 2a des Sockelfortsatzes 2 achsparallel zu (z) riffeln (13) und den Innenumfang 6 des Kappenhalses 7 (vergl. Fig.3) mit einer dazu passenden Riffelung 14 versehen, wie in der linken Hälfte der Fig. 1 und 3 angedeutet, so daß wie bei einer Zahnteilung die Zähne bzw. Nuten der Riffelung 13 in die Nuten bzw. Zähne der Riffelung 14 eingreifen. Der Eingriff zwischen (13) und (14) zum einen und zwischen (10) und (11) zum anderen gewährleistet eine Sicherung gegen Verdrehen und axiales Verschieben der Hohlkolben-Kappe 5a auf ihrem Sitz, und trotzdem ist die Kappe 5a demontabel und remontabel. So kann man am Ende der Lebensdauer der Leuchtstoffröhren 4 die Kappe 5a für eine nächste oder neue KLS-Lampe weiter verwenden oder man kann sich mit einer Mehrzahl von Kappen 5a in den verschiedensten Farben (z.B. rot, gelb, grün, blau etc.) bunte Lichterketten zusammenstellen, wenn man eine entsprechende Anzahl der Baueinheiten 1, 2 3 4 nach Fig. 1, also ,,rohe'' KLS-Lampen ohne Hohlholben-Kappe 5a, hat. Fig. 4 zeigt die Riffelung 14 am Innenumfang 6 des Halses 7 im Querschnitt. Im Falle einer nicht lösbaren Befestigung kann anstelle eines Klebers 9 (Fig. 2) auch eine Kittverbindung vorgesehen sein, dies gilt besonders für Hohlkolben-Kappen 5a aus Glas.

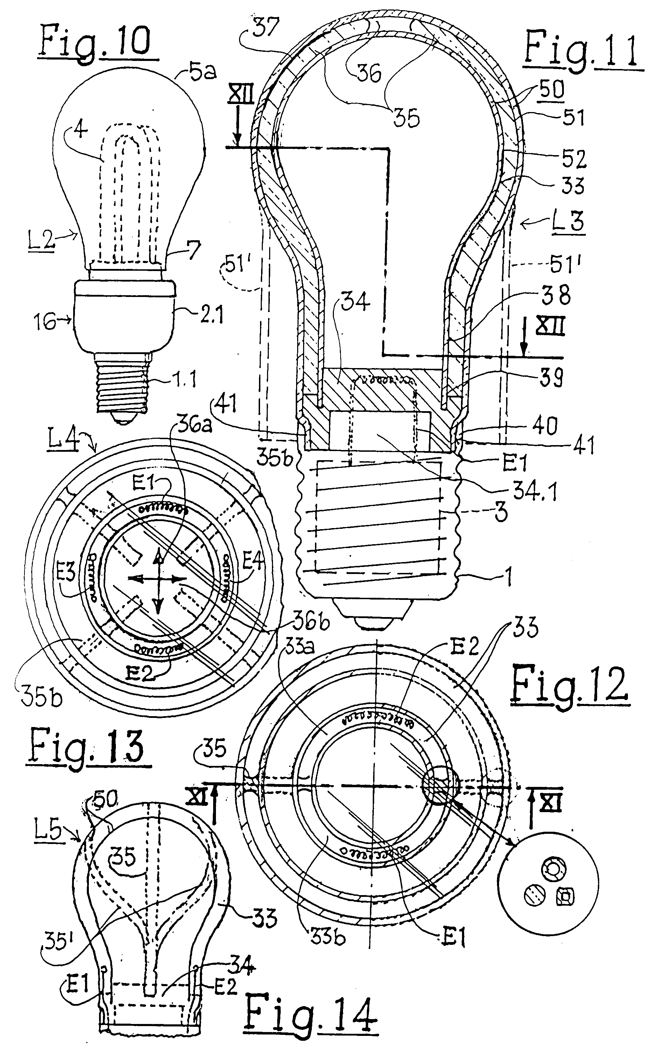

Gemäß dem 2. grundsätzlichen Ausführungsbeispiel nach Fig. 5 bis 10 sitzt eine Hohlkolben-Kappe 5a einer KLS-Lampe L2 mit Sockel 1.1 vom Typ E 27 auf einem Steckerteil 15 und ist mit diesem Steckerteil 15 in eine in Fig. 8 und 9 dargestellte Adapter-Einheit 16 einsteckbar, d.h. mit letzterer elektrisch und mechanisch stabil verbindbar. Zur Adapter-Einheit 16 gehören der schon erwähnte Sockel 1.1, und der Sockelfortsatz 2.1 mit einem vorzugsweise elektronischen Vorschaltgerät in Inneren von (2.1), eine an das Vorschaltgerät 3 angeschlossene Spezial-Steckdose 17A einer Kontakteinrichtung 17 und die eine Kupplungshälfte 18A einer mechanischen Kupplung 18. Wie es Fig. 10 zeigt, haltert der Steckerteil 15 die sich im Inneren der Hohlkolben-Kappe 5a befindenden Leuchtstoffröhren 4 und ist an deren Elektroden (nicht dargestellt) angeschlossen.Der Steckerteil 15 weist wenigstens zwei Steckerstifte 19 auf, mit denen er in die zugehörigen Gegen-Steckkontakte 20 der Spezial-Steckdose 17A des Sockelfortsatzes 2.1 einsteckbar ist. Die Spezial-Steckdose -ist im Sockelfortsatz 2.1 so versenkt angeordnet, daß dann, wenn der Steckerteil 15 mit seinen beiden Steckerstiften 19 in die Gegen-Steckkontakte 20 eingesteckt ist, der Steckerteil 15 zugleich mit seiner Kupplungshälfte 18B in die andere Kupplungshälfte 18A des Sockelfortsatzes 2.1 eingerastet ist. Im einzelnen weist die mechanische Kupplung 18 die folgenden Teile auf: einen mehrkantigen prismatischen Ansatz 21, welcher mittig am Steckerteil 15 auf einem Absatz 22 in Achsrichtung z vorspringend angeordnet und an seinen beiden einander gegenüberliegenden Schmalseiten mit je einem Rastnocken 23 versehen ist. Ferner sind am Umfang des Absatzes 22 an zwei Seiten einander gegenüberliegend je ein Führungsnocken 24 angeordnet. Die beiden Steckerstifte 19 ragen ebenfalls vom Absatz 22 achsparallel zum Ansatz 21 hervor. Die andere Kupplungshälfte 18A nimmt mit einer an den Ansatz 21 angepaßten Ausnehmung 25 letzteren im zusammengesteckten Zustand auf. Die Ausnehmung 25 ist an ihrem Grunde und an ihren Schmalseiten mit einer U-förmigen Nut 26 versehen, in welche eine U-förmige Rastfeder 27 eingelegt ist, welche verlleinert und perspektivisch rechts neben Fig. 8 herausgezeichnet ist. Die den Absatz 22 aufnehmende Vertiefung 28 wird von einem umlaufenden Rand 29 begrenzt, welcher passend zu den Führungsnocken 24 mit Randnuten 30 versehen ist, so daß im zusammengesteckten Zustand der Steckerteil 15 mit seinem Ansatz 21 in der Ausnehmung 25 und mit seinen Führungsnocken 24 in den Randnuten 30 sitzt und dabei die beiden Rastnocken 23 von den Schenkeln der mit ihrem Schenkelverbindungssteg am Grunde der Nut 26 verankerten Rastfeder hintergriffen werden.Damit ist eine stabile, verdrehungssichere Steck- und Rastverbindung gebildet, welche de- und remontabel ist. Im dargestellten Beispiel umfaßt die Kontakteinrichtung 17 eine zweipolige Steckeranordnung 17B mit den beiden Steckerstiften 19, wogegen die Spezial-Steckdose 17A im Raster der Steckerstifte sechs Gegen-Steckkontakte aufweist, so daß der Steckerteil 15 auch mehr als zwei (bis zu 6) Steckerstifte aufweisen kann. Die Hohlkolben-Kappe 5a sitzt mit ihrem Hals 7 auf den als Sitzflächen dienenden abgerundeten Ecken 31 des Steckerteils 15, so daß sichelförmige Spalte 32 freibleiben, was bei größerer Wattzahl der Leuchtstoffröhren 4 (Fig. 10) eine bessere Be- und Entlüftung (Kühlung) ergibt. Der besondere Vorteil dieser KLS-Lampe L2 besteht darin, daß am Ende der Lebensdauer der Leuchtstoffröhren 4 nur diese mit dem Steckerteil 15 und (bei nicht lösbar montierter Kappe 5a) mit der Kappe 5a ausgewechselt wird; die Adapter-Einheit, deren Vorschaltgerät 3 eine im Vergleich zu den Leuchtstoffröhren längere Lebensdauer hat, kann eingeschraubt in der Fassung verbleiben. Darüber hinaus gestaltet sich das Auswechseln des Steckerteils 15 und der daran gehalterten Leuchten 4 einschließlich Kappe 5a durch die Steck-Demontage und-Montage schneller als beim Aus- und Einschrauben.

Beim dritten grundsätzlichen Ausführungsbeispiel einer KLS-Lampe L3 nach Fig. 11 und 12 ist deren äußere Umhüllung die Außenwand 51 eines doppelwandigen Hohlglaskolbens 50, dessen Hohlraum 33 zwischen der Außenwand 51 und einer Innenwand 52 den Entladungsraum der Leuchtstoff- bzw. KLS-Lampe bildet. Mindestens je eine positive und negative Elektrode E1, E2 ragen, gasdicht in einen Glasstopfen 34 eingeschmolzen, in den Hohlraum 33. Zur Erzielung der erforderlichen Entladungsweglänge ist der Hohlraum 33 durch wenigstens eine Trennwand 35 in zwei, je einer Elektrode E1 bzw E2 zugeordnete Entladungs-Teilräume 33a, 33b unterteilt, welche an ihren einander zugewandten Enden über eine von der Trennwand 35 freigelassene Entladungsgasse 36 gasströmungsmäßig und elektrisch miteinander verbunden sind. Die Außenwand 51 ist auf ihrer Innenseite mit Leuchtstoff 37 beschichtet bzw. beschlämmt (der Leuchtstoff 37 ist nur auf einer Teillänge angedeutet). Wie weiterhin von Leuchtstoffröhren 4 an sich bekannt, enthält der Hohlraum 33 eine Quecksilberdampffüllung und eine geringe Menge Edelgas, vorzugsweise Argon.

Bei der Herstellung der KLS-Lampe L3 wird die in Form eines birnenförmigen hohlen Glaskolbens ausgebildete Innenwand 52 mit dem Randbereich ihres Halses 38 in einen ringförmigen Schlitz 39 des Glasstopfens 34 gesteckt. Letzterer ist bereits mit den Elektroden E1, E2 ausgestattet. Die Innenwand weist in diesem Stadium zweckmäßigerweise an ihrer Außenseite bereits die aufgeschmolzene Trennwand 35 auf, welche den dargestellten etwa karoförmigen Querschnitt hat und von der drei weitere geeignete Querschnittsformen in Fig. 12 neben der Hauptfigur in einem Kreis dargestellt sind. Innenwand 52 und Trennwand 35 werden jetzt mit dem Glasstopfen 34 verschmolzen. Als nächstes wird die Außenwand 51 in Form eines hohlen Glaskolbens, jedoch noch mit zylindrischen Mantelwänden 51' (damit sie zum Überstülpen einen genügend großen Innendurchmesser hat) über das aus innenwand 52 und Trennwand 35 bestehende Gebilde geschoben, auf eine zum Verformen geignete Temperatur erhitzt und dann an die Trennwand 35 und die Mantelflächen des Glasstopfens 34 angelegt und in dieser Position (vergl. Fig. 11) mit dem Glasstopfen 34 und der Trennwand 35 verschmolzen. Als nächstes wird der Sockel 1, der in seinem Inneren mit einem elektronischen Vorschaltgerät, vorzugsweise in Form einer gedruckten Schaltung, versehen ist, mit den Ausgangsleitungen des Vorschaltgerätes an die Elektroden E1, E2 angeschlossen und mit dem überstehenden Blechrand 40 des Sockelmantels an den stufenförmig verjüngten Sitzflächen 41 des Glasstopfens und der darüber befindlichen abgekröpften Glasrandpartie der Außenwand 51 befestigt, vorzugsweise durch Kleben oder Kitten.

Fig. 13 zeigt eine erste Abwandlung L4 des Beispiels nach Fig. 11 und 12, bei der zwei Elektrodenpaare E1, E2 und E3, E4 und demgemäß zwei Trennwände 35a, 35b und zwei , durch Pfeile markierte Entladungsgassen 36a, 36b vorgesehen sind. Die Abwandlung L5 nach Fig. 14 zeigt, daß es auch möglich ist, statt der in einer Achsebene angeordneten Trennwand 35 eine spiralig gewundene Trennwand 35' vorzusehen, wodurch die Entladungsweglänge zwischen den Elektroden E1, E2 verlängert werden kann. Es kann zweckmäßig sein, auch den Hohlraum 34.1 des Glasstopfens 34 als Aufnahmeraum für das Vorschaltgerät zu benutzen (Fig. 11), wenn dies aus Platzgründen erforderlich ist, so daß dann der Glasstopfen 34 als ein das Aufnahmevolumen für das Vorschaltgerät 3 vergrößerndes Zwischenstück dient. Die KLS- Lampen L3, L4, L5 sind Leuchtstofflampen, deren Entladungsräume von birnenförmigen doppelwandigen Hohlglaskolben gebildet werden, sie stellen somit quasi eine Synthese aus Gühbirnen Typ Edison und den Leuchtstofflampen dar. Die Funktion der Leuchtstofflampen ist hinlänglich bekannt, siehe z.B. das Buch ,,Philips Lehrbriefe:Elektrotechnik und Elektronik'' von H. Bahr,10. Auflage 1982 S. 365 - 370, erschienen im Hüthig-Verlag Heidelberg, so daß hier von einer näheren Erläuterung abgesehen werden kann.

In die Kunststoff-Molekularmatrix einbaubare Farbkonzentrate auf Basis Polyethylen sind z.B bei der Firma A. Schulman GmbH in D-50170 Kerpen unter der Produktbezeichnung POLYBATCH in den verschiedensten Farben (gelb, grün, rot u.s.w.) erhältlich.

### Bezugszeichenliste

- L1: Kompakt-Leuchtstofflampe (KLS-Lampe)
- 1: Sockel
- 2: Sockelfortsatz
- 3: Vorschaltgerät
- 4: Leuchtstoffröhren
- 3a: Deckseite von (2)
- 4a: U-Schenkel von (4)
- z: Längsachse von (L1, L2)
- 5: Hohlkolben
- 5a: Hohlkolben-Kappe
- 6: Innenumfang von (7)
- 7: Kappenhals
- 8: Sitzflächen an (2)
- 9: Kleber oder Klebstoff
- 10: Wulst bzw. Randwulst
- 11: Nut
- 12: Randschlitze an (7)
- 2a: Bund von (2)
- 13: Riffelung an (2a)
- 14: Riffelung an (6)
- L2: KLS-Lampe, weitere
- 1.1: Sockel von (L2)
- 15: Steckerteil
- 16: Adapter-Einheit
- 2.1: Sockelfortsatz von (16)
- 17A: Spezial-Steckdose
- 17: Kontakteinrichtung
- 18A: Kupplungshälfte
- 18: Kupplung, mechanische
- 19: Steckerstifte
- 20: Gegen-Steckkontakte
- 18B: Kupplungshälfte, zweite
- 21: prismatischer Ansatz
- 22: Absatz
- 23: Rastnocken
- 24: Führungsnocken
- 25: Ausnehmung
- 26: Nut, U-förmig
- 27: Rastfeder
- 28: Vertiefung
- 29: umlaufender Rand von (28)
- 30: Randnuten
- 17B: Steckeranordnung
- 31: abgerundete Ecken von (15)
- 32: Spalte, sichelförmig
- L3: KLS-Lampe, weitere
- 50: Hohlglaskolben, doppelwandig
- 51: Außenwand von (50)
- 52: Innenwand von (50)
- 33: Hohlraum zwischen (51) und (52)
- E1, E2: Elektroden
- 34: Glasstopfen
- 35: Trennwand
- 33a, 33b: Entladungs-Teilräume
- 36: Entladungsgasse
- 37: Leuchtstoff-Beschichtung
- 38: Hals von (52)
- 39: ringförmiger Schlitz in (34)
- 51': zylindrische Mantelwand an (51)
- 40: Blechrand an (1)
- 41: Sitzflächen an (34)
- L4: KLS-Lampe, weitere
- E3, E4: Elektroden, weitere
- 35a, 35b: Trennwände an (L4)
- 36a, 36b: Entladungsgassen an (L4)
- L5: KLS-Lampe, weitere
- 35': Trennwand, spiralig gewunden
- 34.1: Hohlraum an (34)

## Patentansprüche

1. Kompakt-Leuchtstofflampe mit Glühlampensockel, insbesondere mit Sockelgewinde Typ E 27 oder E 14, und integriertem Vorschaltgerät bzw. Starter,
dadurch gekennzeichnet, daß die Kompakt-Leuchtstofflampe (L1 - L5) als äußere Umhüllung einen birnenförmigen, mit dem Sockel (1; 1.1) verdrehungssicher verbundenen Hohlkolben (5, 5a; 50) in der Form der bekannten Glühlampen Typ Edison aufweist und der Hohlkolben aus zumindest durchscheinendem Material besteht.

2. Kompakt-Leuchtstofflampe nach Anspruch 1, mit einem sich an den Sockel anschließenden topfförmigen Sockelfortsatz aus Isoliermaterial, der in seinem Inneren Vorschaltgerät und ggfs. Starter aufnimmt und der Halterung sowie dem elektrischen Anschluß der Leuchtstoffröhre(n) dient, welche auf der Seite seiner sockel-abgewandten Deckfläche nach außen ragen,
dadurch gekennzeichnet, daß der birnenförmige Hohlkolben als separate Hohlkolben-Kappe (5a) ausgebildet ist, die auf den topfförmigen Sockelfortsatz (2) aufsetzbar ist.

3. Kompakt-Leuchtstofflampe nach Anspruch 2, dadurch gekennzeichnet, daß die Hohlkolben-Kappe (5a) auf den Sockelfortsatz (2) aufsteckbar ist.

4. Kompakt-Leuchtstofflampe nach Anspruch 3, dadurch gekennzeichnet, daß die Hohlkolben-Kappe (5a) am Innenumfang (6) ihres Öffnungsrandes eine umlaufende Wulst (10) aufweist, mit der sie in eine umlaufende Nut (11) am Außenumfang des Sokkelfortsatzes (2) einschnappbar ist.

5. Kompakt-Leuchtstofflampe nach einem der Ansprüche 2 bis 4, dadurch gekennzeichnet, daß die Hohlkolben-Kappe (5a) mit dem Sockelfortsatz (2) verklebt ist.

6. Kompakt-Leuchtstofflampe nach einem der Ansprüche 2 bis 5, dadurch gekennzeichnet, daß die Hohlkolben-Kappe (5a) aus einem elastisch deformierbaren und insbesondere färbbaren Kunststoff, z.B. auf PE-Basis, besteht.

7. Kompakt-Leuchtstofflampe nach Anspruch 6, dadurch gekennzeichnet, daß der Kunststoff-Masse der Hohlkolben-Kappe (5a) ein in die Kunststoff-Molekularmatrix einbaubarer Farbstoff beigemischt ist.

8. Kompakt-Leuchtstofflampe nach einem der Ansprüche 1 bis 3, dadurch gekennzeichnet, daß Hohlkolben (5) oder Hohlkolben-Kappe (5a) aus durchsichtigem oder durchscheinendem Glas bestehen.

9. Kompakt-Leuchtstofflampe nach einem der Ansprüche 1 oder 8, dadurch gekennzeichnet, daß Hohlkolben (5) oder Hohlkolben-Kappe (5a) an dem Sockelfortsatz (2) mittels Klebens oder Kittens befestigt sind.

10. Kompakt-Leuchtstofflampe nach einem der Ansprüche 1 bis 9, dadurch gekennzeichnet, daß Hohlkolben (5) oder Hohlkolben-Kappe (5a) an oder auf einem Steckerteil (15) sitzen und mit dem Steckerteil (15) in eine Vorschaltgerät (3) und ggfs. Starter enthaltende Adapter-Einheit (16) aus Sockelfortsatz (2.1) und Sockel (1.1), vorzugsweise einrastbar, einsteckbar sind.

11. Kompakt-Leuchtstofflampe nach Anspruch 10, dadurch gekennzeichnet, daß der Steckerteil (15) wenigstens zwei Steckerstifte (19) und der Sockelfortsatz (2.1) die zugehörigen Gegen-Steckkontakte (20) aufweist.

12. Kompakt-Leuchtstofflampe nach Anspruch 10 oder 11, dadurch gekennzeichnet, daß zur Entlastung der elektrischen Kontakte (19, 20) von mechanischen Kräften der Steckerteil (15) mit einem mehrkantigen prismatischen Ansatz (21) in eine entsprechend geformte Ausnehmung (25) des Sockelfortsatzes (2.1) einfügbar ist.

13. Kompakt-Leuchtstofflampe nach Anspruch 12, dadurch gekennzeichnet, daß der mehrkantige Ansatz (21) und die zugehörige Ausnehmung (25) mittig am Steckerteil (15) bzw. im Sockelfortsatz (2.1)angeordnet sind und die Steckerstifte (19) bzw. Gegen-Steckkontakte (20) im verbleibenden äußeren Randbereich von Steckerteil (15) und Sockelfortsatz (2.1) angeordnet sind.

14. Kompakt-Leuchtstofflampe nach Anspruch 12 oder 13, dadurch gekennzeichnet, daß der Ansatz (21) an mindestens zwei gegenüberliegenden Mantelflächen mit je einem Rastnocken (23) versehen und in der Ausnehmung (25) des Sockelteils (2.1) eine damit kooperierende U-förmige Rastfeder (27) sitzt.

15. Kompakt-Leuchtstofflampe nach Anspruch 1, dadurch gekennzeichnet, daß die äußere Umhüllung die Außenwand (51) eines doppelwandigen Hohlglaskolbens (50) ist und der Hohlraum (33) zwischen Außen- und Innenwand (51, 52) den Entladungsraum der Leuchtstofflampe (L3 - L5) bildet, wobei mindestens je eine positive und negative Elektrode (E1, E2), gasdicht eingeschmolzen, in den Hohlraum (33) ragen und zur Erzielung der erforderlichen Entladungsweglänge der Hohlraum (33) durch wenigstens eine Trennwand (35) in zwei, je einer Elektrode (E1, E2) zugeordnete Entladungs-Teilräume (33a, 33b) unterteilt ist, die an ihren einander zugewandten Enden über eine von der Trennwand (35) freigelassene Entladungsgasse (36) gasströmungsmäßig und elektrisch miteinander verbunden sind.

16. Kompakt-Leuchtstofflampe nach Anspruch 15, dadurch gekennzeichnet, daß der Sockel (1) mindestens die Größe des Sockeltyps E 27 aufweist und in seinem Inneren ein kompaktes elektronisches Vorschaltgerät (3) enthält, dessen Ausgangspole mit den durch den Hals des Hohlglaskolbens (50) herausgeführten Elektroden-Anschlüssen elektrisch verbunden sind, wobei der Sockel (1), ggfs. über ein mechanisch stabil mit ihm verbundenes, sein Aufnahmevolumen für das Vorschaltgerät vergrößerndes Zwischenstück (34) aus elektrisch isolierendem Material, mit dem Hals des Hohlglaskolbens (50) mechanisch stabil verbunden ist.

17. Kompakt-Leuchtstofflampe nach Anspruch 16, dadurch gekennzeichnet, daß der Sockel (1) mit dem Zwischenstück bzw. einem Glasstopfen (34) und der darauf sitzenden Außenwand (51) des Hohlglaskolbens (50) durch Ankitten oder Ankleben verbunden ist.
